(19) Europäisches Patentamt
European Patent Office
Office européen des brevets

(11) EP 1 674 758 A1

(12) EUROPEAN PATENT APPLICATION

(43) Date of publication:
**28.06.2006 Bulletin 2006/26**

(51) Int Cl.:
***F16F 9/04*** (2006.01) ***B29D 22/00*** (2006.01)

(21) Application number: **05112351.1**

(22) Date of filing: **16.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.12.2004 US 638645 P**

(71) Applicant: **THE GOODYEAR TIRE & RUBBER COMPANY**
**Akron,**
**Ohio 44316-0001 (US)**
Designated Contracting States:
**DE FR GB**

(72) Inventor: **Kerstetter III, Randal Howard**
**44281, Wadsworth (US)**

(74) Representative: **Kutsch, Bernd**
**Goodyear S.A.,**
**Patent Department,**
**Avenue Gordon Smith**
**7750 Colmar-Berg (LU)**

# (54) Airspring

(57) The present invention is directed to an airspring having an airsleeve comprising an elastomeric liner; a reinforcing layer overlaying the liner; and an elastomeric cover overlaying the reinforcing layer; the cover made from an a vulcanizable elastomeric composition comprising: 100 parts by weight of elastomer comprising from 30 to 50 parts by weight of natural rubber, from 10 to 30 parts by weight of polybutadiene, and from 30 to 50 parts by weight of ethylene propylene diene terpolymer (EPDM); from 20 to 60 parts by weight, per 100 parts by weight of elastomer, of silica; from 1 to 10 parts by weight, per 100 parts by weight of elastomer, of an organosilane polysulfide; from 1 to 10 parts by weight, per 100 parts by weight of elastomer, of an organic peroxide; and from 0.1 to 40 parts by weight, per 100 parts by weight of elastomer, of a crosslinking coagent.

EP 1 674 758 A1

## Description

### Background of the Invention

Airsprings have been used for motor vehicles and various machines and other equipment for a number of years. The springs are designed to support a suspension load such as a vehicle. The airspring usually includes a flexible elastomeric reinforced airsleeve that extends between a pair of end members. The airsleeve is attached to end members to form a pressurized chamber therein. The end members mount the airspring on spaced components, or parts of the vehicle or equipment, on which the airspring is to be mounted. The internal pressurized gas, usually air, absorbs most of the motion impressed upon or experienced by one of the spaced end members. The end members move inwards and towards each other when the spring is in jounce, and away and outwards from each other when the spring is in rebound. The design height of the airspring is a nominal position of the spring when the spring is in neither jounce nor rebound.

There have been two basic designs of airsprings: a rolling lobe airspring, as seen in US-A- 3,043,582 and US-A- 5,954,316; and a bellows type airspring, as seen in US-A- 2,999,681 and US-A- 3,084,952. In a rolling lobe-type airspring, the airsleeve is a single circular-shaped sleeve secured at both ends. During jounce, the airsleeve rolls down the sides of a piston support. In a bellows-type airspring, the multiple meniscus-shaped portions of the airsleeve extend out radially as the spring is in jounce.

Airsleeves usually have a rubber innerliner, two plies of rubber coated cord fabric, and a rubber cover. These sleeves see their greatest commercial usage in the automotive helper spring market by being mounted as airsprings on shock absorbers and struts. Other uses include truck cab suspension springs, truck driver seat springs, automobile airsprings, and a variety of industrial airsprings.

In the manufacture of fabric-reinforced, molded rubber articles such as airsleeves, it is desirable to obtain strong adhesion between the fabric plycoat and the cover, and also high resistance to deterioration of the bond with flexing of the structure.

Airsleeves are typically black, owing to the presence of carbon black as a reinforcement. In some applications, however, it may be desirable to have an airspring cover with a color other than black. Such a cover would be useful for purposes of identification and uniformity. The cover compound must, however, satisfy the requirements of flex and adhesion.

### Summary of the Invention

The present invention is directed to an airspring having an airsleeve according to claim 1. The dependent claims cover preferred embodiments of the invention.

### Description of the Invention

In one embodiment, the present invention is directed to an airspring having an airsleeve comprising an elastomeric liner; a reinforcing layer overlaying the liner; and a colorable elastomeric cover overlaying the reinforcing layer; the cover comprising: 100 parts by weight of elastomer comprising from 30 to 50 parts by weight of natural rubber, from 10 to 30 parts by weight of polybutadiene, and from 30 to 50 parts by weight of ethylene propylene diene terpolymer (EPDM); from 20 to 60 parts by weight, per 100 parts by weight of elastomer, of silica; and from 1 to 10 parts by weight, per 100 parts by weight of elastomer, of an organosilane polysulfide.

Suitable EPDM include those having an ethylene content from 45 to 80 percent by weight. The EPDM also includes from 1 to 10 percent by weight of a diene monomer, and the balance substantially of propylene. In one embodiment, the EPDM comprises ethylidene norbornene. In another embodiment, the EPDM comprises a diene monomer selected from those as are known in the art and are commonly used in preparation of EPDM. Such diene monomers include, but are not limited to, any appropriate non-conjugated diene may be used including, for example, 1,4-hexadiene, dicyclopentadiene or ethylidene norbornene (ENB). In one embodiment, the EPDM is ROYALENE® 645, available from Crompton, as an ethylene-propylene-ethylidene norbornene terpolymer with an ethylene/propylene weight ratio of 66/34, 8.5 percent by weight of ENB, and a Mooney viscosity 1+4 (125°C) of 52.

The term "phr", as used herein, and according to conventional practice, refers to "parts by weight of a respective material per 100 parts by weight of rubber, or elastomer".

In one aspect of the invention, the textile fibers are selected from the group consisting of woven fabrics, knitted fabric, or spun bonded fabric, and fiber cord. They preferably comprise a material selected from the group consisting of rayon, nylon, polyester, aramid, cotton, and combinations thereof. In a further aspect of the invention, the cover is exclusive of staining or coloring antioxidants and antiozonants. The RFL, if used, comprises resorcinol, formaldehyde, and at least one polymer selected from styrene-butadiene copolymer and vinylpyridene-styrene-butadiene terpolymer.

The airspring may be a bellows type airspring or a rolling lobe airspring. The coagent is preferably selected from the group consisting of organic acrylates, organic methacrylates, divinyl esters, divinyl benzene, bis-maleimides, triallylcyanurates, polyalkyl ethers and esters, metal salts of an alpha-beta unsaturated organic acid and mixtures thereof. The plycoat rubber composition preferably comprises at least one elastomer selected from the group consisting of epichlorohydrin rubber, polyisobutylene, halogenated butyl rubbers, natural rubber, polyisoprene, polybutadiene, styrene-butadiene, polychloroprene, and ethylene propylene diene rubber (EPDM).

In one embodiment, the vulcanization of the cover is conducted after a sulfur-vulcanizing agent has been intimately dispersed in the composition. Examples of suitable sulfur-vulcanizing agents include elemental sulfur (free sulfur), an amine disulfide, polymeric polysulfide or sulfur olefin adducts. Preferably, the sulfur-vulcanizing agent is elemental sulfur. The sulfur-vulcanizing agent may be used in an amount ranging from 0.1 to 8 phr, with a range of from 0.5 to 5.0 being preferred.

In one embodiment, the cover composition is cured with sulfur and peroxide. In another embodiment, the cover composition is cured with a peroxide. Suitable peroxides for curing along with sulfur include those that are normally used in such base stocks. For example peroxides, such as dicumyl peroxide, $\alpha$-$\alpha$-bis(t-butylperoxide)diisopropylbenzene, benzoyl peroxide, 2,4-dichlorobenzoyl peroxide, 1,1-bis(t-butylperoxy)3,3,5-trimethylcyclohexane, 2,5-dimethyl-2,5-bis (t-butylperoxy)hexane, 2,5-dimethyl-2,5-bis(t-butylperoxy)hexyne-3, and n-butyl 4,4-bis(t-butylperoxy)valerate. From 1 to 10 parts by weight of peroxide are utilized based on 100 parts by weight of elastomer.

A crosslinking coagent may be present with a peroxide. Coagents are monofunctional and polyfunctional unsaturated organic compounds which are used in conjunction with the free radical initiators to achieve improved vulcanization properties. Representative examples include organic acrylates, organic methacrylates, divinyl esters, divinyl benzene, bis-maleimides, triallylcyanurates, polyalkyl ethers and esters, metal salts of an alpha-beta unsaturated organic acid and mixtures thereof.

The coagent may be present in a range of levels. Generally speaking, the coagent is present in an amount ranging from 0.1 to 40 phr. Preferably, the coagent is present in an amount ranging from 1 to 15 phr.

As mentioned above, one class of coagents are acrylates and methacrylates. Representative examples of such coagents include di-, tri-, tetra- and penta-functional acrylates, di-, tri-, tetra- and penta-functional methacrylates and mixtures thereof. Specific examples of such coagents include 1,3-butylene glycol diacrylate, 1,3-butylene glycol dimethacrylate, 1,4-butanediol diacrylate, 1,4-butanediol dimethacrylate, 1,6 hexanediol diacrylate, 1,6 hexanediol dimethacrylate, 2-henoxyethyl acrylate, alkoxylated diacrylate, alkoxylated nonyl phenol acrylate, allyl methacrylate, caprolactone acrylate, cyclohexane dimethanol diacrylate, cyclohexane dimethanol, methacrylate diethylene glycol diacrylate, diethylene glycol dimethacrylate, dipentaerythritol pentaacrylate, dipropylene glycol diacrylate, di-trimethylolpropane tetraacrylate, ethoxylated trimethylolpropane triacrylate, ethoxylated bisphenol A dimethacrylate, ethoxylated nonylphenol acrylate, ethoxylated tetrabromo bisphenol A diacrylate, ethoxylated bisphenol A diacrylate, ethoxylated bisphenol dimethacrylate, ethoxylated trimethylolpropane triacrylate, ethoxylated bisphenol A diacrylate, ethylene glycol dimethacrylate, glycidyl methacrylate, highly propoxylated glyceryl triacrylate, isobornyl acrylate, isobornyl methacrylate, isodecyl acrylate, isodecyl methacrylate, isooctyl acrylate, lauryl acrylate, methoxy polyethylene glycol monomethacrylate, methoxy polyethylene glycol monomethacrylate, neopentyl glycol diacrylate, neopentyl glycol dimethacrylate, octyldecyl acrylate, pentaacrylate ester, pentaerythritol tetraacrylate, pentaerythritol triacrylate, polyethylene glycol diacrylate, polyethylene glycol dimethacrylate, propoxylated glyceryl triacrylate, propoxylated neopentyl glycol diacrylate, propoxylated allyl methacrylate, propoxylated glyceryl triacrylate, propoxylated trimethylolpropane triacrylate, propoxylated trimethylolpropane triacrylate, stearyl acrylate, stearyl methacrylate, tetraethylene glycol diacrylate, tetraethylene glycol dimethacrylate, tetrahydrofurfuryl acrylate, tetrahydrofurfuryl methacrylate, tridecyl acrylate, tridecyl methacrylate, triethylene glycol diacrylate, triethylene glycol dimethacrylate, trifunctional acrylate ester, trifunctional methacrylate ester, trimethylolpropane triacrylate, trimethylolpropane triacrylate, trimethylolpropane trimethacrylate, tripropylene glycol diacrylate, tripropylene glycol diacrylate, tris (2-hydroxy ethyl) isocyanurate triacrylate, tris (2-hydroxy ethyl) isocyanurate triacrylate, and tris (2-hydroxy ethyl) isocyanurate trimethacrylate.

The metal salts of a, b-unsaturated organic acids include the metal salts of acids including acrylic, methacrylic, maleic, fumaric, ethacrylic, vinyl-acrylic, itaconic, methyl itaconic, aconitic, methyl aconitic, crotonic, alpha-methylcrotonic, cinnamic and 2,4-dihydroxy cinnamic acids. The metals may be zinc, cadmium, calcium, magnesium, sodium or aluminum. Zinc diacylate and zinc dimethacrylate are preferred.

It is readily understood by those having skill in the art that the cover rubber composition would be compounded by methods generally known in the rubber compounding art, such as mixing the rubbers with various commonly used additive materials such as, for example, curing aids, activators, retarders, processing oils, resins, reinforcing resins, tackifying resins, plasticizers, fillers, pigments, fatty acids, zinc oxide, magnesium oxide, waxes, and peptizing agents. The additives mentioned above are selected and commonly used in conventional amounts. Representative examples of such resins include phenolformaldehyde resins, hydrocarbon resins, coumarone-indene resins, and methylene donor/ methylene acceptor type resins. Typical amounts of processing oils comprise 1 to 50 phr. Such processing oils can include, for example, aromatic, naphthenic, and/or paraffinic processing oils. Typical amounts of antioxidants comprise

1 to 5 phr. Typical amounts of antiozonants comprise 1 to 5 phr. Typical amounts of fatty acids (such as stearic acid and oleic acid) are used in an amount ranging from 0.2 to 3 phr. Typical amounts of zinc oxide comprise 0.5 to 8 phr. Typical amounts of magnesium oxide ranges from 0 to 1.0 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

In one embodiment, the cover compound includes no diamine antiozonants that may stain or discolor the cover. The EPDM provides the necessary level of ozone resistance. However, nonstaining or noncoloring antioxidant/antiozonants may be used if desired.

Various colorants may be used to impart color to the cover composition, if desired. The colorants include those as are known in the art and may be organic dyes, inorganic dyes, organic pigments, or inorganic pigments. For example, such colorants might be pigments, classified according to CAS numbers, for example, red 38 CAS 6358-87-8; violet 32 CAS 12225-0800; blue 15 CAS 147-14-8, copper phthalocyanine; blue 29, CAS 57455-37-5, ultramarine blue; violet 19 CAS 1047-16-1; yellow 110 CAS 106276-80-6, yellow 109 CAS 106276-79-3; and white 6 CAS 13463-67-7, titanium dioxide. Carbon black in a non-reinforcing amount may be used as a colorant to impart black color to the cover. Colorants may be added in an amount sufficient to impart the desired level of color in the cover. In one embodiment, the cover composition includes phthalocyanine as Blue 626C dispersed on EP rubber, obtained from Akrochem.

The cover compound includes a reinforcing filler. Suitable reinforcing filler includes silica, but does not include carbon black. Carbon black, if used, is present only in a small amount, either as a colorant or due to its use as a carrier. It will be understood by one skilled in the art that various rubber additives are available for convenience in handling as a dispersion on a carbon black carrier. Carbon black, if used, is present in the cover compound in an amount less than 10 phr.

The commonly-employed siliceous pigments which may be used in the cover compound include conventional pyrogenic and precipitated siliceous pigments (silica), although precipitated silicas are preferred. The conventional siliceous pigments preferably employed are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600. The BET method of measuring surface area is described in the Journal of the American Chemical Society, Volume 60, Page 304 (1930).

The conventional silica may also be typically characterized by having a dibutylphthalate (DBP) absorption value in a range of 100 to 400.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

Accelerators may be used to control the time and/or temperature required for vulcanization and to improve the properties of the vulcanizate. In general, from 0.1 to 4 phr of total accelerator(s) is used. In one embodiment, only a primary accelerator may be used. In another embodiment, combinations of a primary and a secondary accelerator might be used with the secondary accelerator being used in smaller amounts (of 0.05 to 1.0 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are sulfenamides, amines, disulfides, guanidines, thioureas, thiazoles, thiurams, dithiocarbamates, xanthates and mixtures thereof. If a second accelerator is used, the secondary accelerator is preferably a guanidine, dithiocarbamate or thiuram compound. In one embodiment, triethanolamine is added to the cover composition in an amount ranging from 1 to 5 parts by weight per 100 parts by weight of elastomer.

It may be preferred to have the cover compound to additionally contain a conventional sulfur-containing organosilicon compound. Examples of suitable sulfur-containing organosilicon compounds are of the formula:

$$Z - Alk - S_n - Alk - Z \qquad I$$

in which Z is selected from the group consisting of

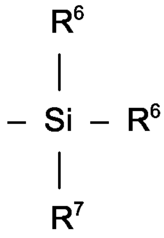 , 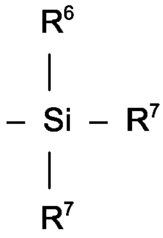 and 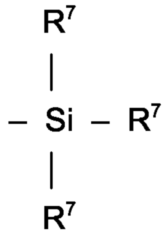

where $R^6$ is an alkyl group of 1 to 4 carbon atoms, cyclohexyl or phenyl; $R^7$ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur-containing organosilicon compounds which may be used in the cover compound include: 3,3'-bis(trimethoxysilylpropyl) disulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide, 2,2'-bis(methyl dimethoxysilylethyl) trisulfide, and 3,3'-bis(dimethoxyphenylsilyl-2-methylpropyl) disulfide.

The preferred sulfur containing organosilicon compounds for use in the cover compound are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore, as to formula I, preferably Z is

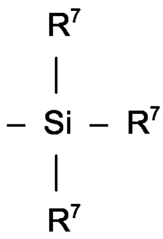

where $R^7$ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur-containing organosilicon compound of formula I in the tear resistant rubber compound will vary depending on the level of other additives that are used. Generally speaking, the amount of the compound of formula I will range from 0.5 to 20 phr. Preferably, the amount will range from 1 to 10 phr.

The mixing of the cover rubber composition can be accomplished by methods known to those having skill in the rubber mixing art. For example, the ingredients are typically mixed in at least two stages, namely at least one non-productive stage followed by a productive mix stage. The final curatives including sulfur-vulcanizing agents, accelerators, and peroxide are typically mixed in the final stage which is conventionally called the "productive" mix stage in which the mixing typically occurs at a temperature, or ultimate temperature, lower than the mix temperature(s) of the preceding non-productive mix stage(s). The rubber, silica, and carbon black (if used) may be mixed in one or more non-productive mix stages.

Vulcanization of the cover rubber composition of the present invention is generally carried out at conventional temperatures ranging from 100°C to 200°C. Any of the usual vulcanization processes may be used, such as heating in a press or mold, heating with superheated steam, or hot air or in a salt bath.

The reinforcing layer includes a plycoat comprising a curable rubber composition. Elastomers that may be used in the plycoat compound include at least one elastomer selected from among elastomers conventionally used in manufacturing airsleeves included, but not limited to, elastomers such as epichlorohydrin rubber, polyisobutylene, halogenated butyl rubbers, natural rubber, polyisoprene, polybutadiene, styrene-butadiene, polychloroprene, EPDM, and blends of such elastomer. The plycoat compound may include any of various additives and fillers as in the cover compound.

The reinforcing layer includes, along with the plycoat, textile fibers treated with an RFL type adhesive dip. Textile fibers in the form of suitable cord or fabric may be in various forms, including woven fabrics, knitted fabric, or spun bonded fabric, and fiber cord. The cord or fabric may be various materials typically used as reinforcement in composite materials, including rayon, nylon, polyester, aramid, cotton, and combinations thereof. In one embodiment,

the cord or fabric is nylon or polyester.

The reinforcing layer includes an adhesive composition useful in adhering textile fibers to the plycoat. In one embodiment, the so-called RFL adhesive composition may comprise resorcinol, formaldehyde, and one or more polymer latexes. In one embodiment, the polymer latex may include one or more of styrene-butadiene copolymer latex, vinylpyridine-styrene-butadiene terpolymer latex, or latexes made from polymers included in the plycoat, liner, or cover compositions.

The RFL adhesive dip is, in general, used in the form of an aqueous latex. The latices are prepared by free radical emulsion polymerization of styrene and butadiene to form a copolymer latex, and free radical emulsion polymerization of styrene, butadiene, and vinylpyridine to form a terpolymer latex. The charge compositions used in the preparation of the latices contain monomers, at least one surfactant, and at least one free radical initiator. Such latices are well known, and a suitable RFL dip may be made by any of various methods as are known in the art, for example, following the teaching of US-A-3,525,703.

The RFL adhesive may optionally include a blocked isocyanate. In one embodiment from 1 to 20 parts by solid of blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc, and phenolformaldehyde blocked isocyanates as disclosed in US-A-3,226,276; US-A-3,268,467; and US-A-3,298,984.

In accordance with this invention, the cord or fabric to be treated is dipped for one to three minutes in the RFL dip, and dried at a temperature within the range of 75°C to 265°C for 0.5 minutes to 20 minutes, and thereafter calendered into the plycoat rubber compound and cured therewith. The dip process may be carried out in one or two steps. Adjustment of the solids content of the dips for a one or two-step dipping process is done as required, as is known to one skilled in the art.

The airsleeve further includes an elastomeric liner. The liner may each comprise vulcanizable rubber compounds; the compounds used in the liner may be the same as that used in the cover, or it may be different. Elastomers that may be used in the liner compound include at least one elastomer selected from among elastomers conventionally used in manufacturing airsleeves included, but not limited to, elastomers such as epichlorohydrin rubber, polyisobutylene, halogenated butyl rubbers, natural rubber, polyisoprene, polybutadiene, styrene-butadiene, polychloroprene, EPDM, and blends of such elastomers. The liner compound may include any of various additives and fillers as in the cover compound.

Vulcanization of the airsleeve is generally carried out at conventional temperatures ranging from 100°C to 200°C. Methods for making airsleeves are described in US-A-3,794,538 and US-A-6,264,178.

The airsleeve may be used in any of various airspring applications including truck cab suspension springs, truck driver seat springs, automobile airsprings, and a variety of industrial airsprings. These airsprings may be of various designs including, but not limited to, a rolling lobe airspring, for example as in US-A-3,043,582 and US-A-5,954,316 and a bellows-type airspring, for example as in US-A-2,999,681 and US-A-3,084,952.

The invention is further illustrated by the following example.

EXAMPLE 1

In this example, the physical properties of a cover compound according to the current invention are illustrated. Airsleeve cover compounds were prepared according to Tables 1 and 2, with amounts in parts by weight per hundred by weight of elastomer (phr). Table 1 gives the base compound recipe, and Table 2 gives the variable amounts of various components. Cover test samples were prepared using samples 1-9 and tested for physical properties as indicated in Table 3. Tests were done according to the following protocols:

Rheometer
ODR at 150°C, ASTM D2048
Mooney Scorch at 121°C, ASTM D1646

Tensile, Elongation, and Hardness
Original, ASTM D412

Adhesion to Rubber Plycoat Compound, Modified ASTM D413 Original

Tear
Die C tear, ASTM D624

TEXUS Flex
Modified ASTM D3629-99

**Table 1**

| | |
|---|---|
| natural rubber[1] | 20 |
| polybutadiene[2] | 70 |
| EPDM[3] | 1.5 |
| Stearic acid | 2.1 |
| Waxes[4] | 3.31 |
| Zinc Oxide | variable |
| Reinforcing Filler | variable |
| Coupling Agent | variable |
| Oil | variable |
| Process Aid | variable |

[1] SMR-20
[2] Budene® 1207, from the Goodyear Tire & Rubber Company
[3] Royalene® 645, 75 phr oil extended, from Crompton
[4] microcrystalline and paraffinic types

**Table 2**

| sample no. | 1 | 2 | 3 | 4 | 5 | 6 | 7 | 8 | 9 |
|---|---|---|---|---|---|---|---|---|---|
| carbon black[5] | 55 | 55 | 55 | 55 | 0 | 0 | 0 | 0 | 0 |
| silica[6] | 0 | 0 | 0 | 0 | 40 | 40 | 40 | 40 | 40 |
| napthenic oil | 0 | 0 | 0 | 0 | 4 | 4 | 4 | 4 | 4 |
| coupling agent[7] | 0 | 0 | 0 | 0 | 6.3 | 6.3 | 6.3 | 6.3 | 6.3 |
| peroxide[8] | 2 | 2 | 3 | 3 | 2 | 2 | 3 | 3 | 1.75 |
| coagent[9] | 6.67 | 9.33 | 6.67 | 9.33 | 6.67 | 9.33 | 6.67 | 9.33 | 0 |
| sulfur[10] | 0 | 0 | 0 | 0 | 0 | 0 | 0 | 0 | 1.89 |
| accelerator[11] | 0 | 0 | 0 | 0 | 0 | 0 | 0 | 0 | 1 |
| triethanolamine | 0 | 0 | 0 | 0 | 0 | 0 | 0 | 0 | 2.5 |
| process - aid[12] | 0 | 0 | 0 | 0 | 0 | 0 | 0 | 0 | 3 |

[5] N550
[6] HiSil®243
[7] 50 percent by weight of bis(triethoxypropylsilyl) tetrasulfide on N330 carbon black
[8] Dicup® 40C, 40 percent active dicumyl peroxide on precipitated calcium carbonate
[9] Saret® 75 EPM 2M, believed to be 75 percent active zinc diacrylate on an elastomer
[10] insoluble sulfur, 20% oil treated
[10] n-tert-butyl-2-benzothiazolesulfenamide
[12] Struktol® HP55, mix of dark aromatic hydrocarbon resins and fatty acid derivatives

**Table 3**

| sample no. | 1 | 2 | 3 | 4 | 5 | 6 | 7 | 8 | 9 |
|---|---|---|---|---|---|---|---|---|---|
| **MOONEY SCORCH (small rotor), 121°C, 30 minutes** | | | | | | | | | |
| MINIMUM | 25 | 27 | 26.6 | 26.2 | 227.4 | 24.8 | 26.5 | 24.9 | 27.2 |
| 5PTRIS | 23.6 | 16.9 | 22.9 | 38.5 | 26.22 | 28.88 | 19.67 | 20.45 | 29.85 |
| **ODR RHEOMETER, 150°C** | | | | | | | | | |
| T50 | 10.9 | 11.2 | 10.3 | 10.7 | 16.08 | 15.13 | 14.28 | 14.06 | 10.82 |
| T90 | 37.33 | 37.8 | 37.7 | 37.8 | 43.91 | 42.85 | 42.48 | 42.34 | 19.08 |
| TRISE1 | 2.2 | 2.3 | 1.9 | 2.3 | 3.13 | 2.88 | 2.42 | 2.62 | 3.83 |
| MAX | 33.1 | 34.2 | 39.0 | 41.2 | 27.46 | 28.93 | 23.15 | 33.85 | 37.4 |
| MIN | 8.3 | 7.5 | 7.7 | 7.6 | 7.51 | 6.84 | 7.22 | 16.57 | 7.64 |
| DELTA | 24.7 | 26.7 | 31.3 | 33.6 | 20.0 | 22.1 | 24.9 | 17.3 | 29.8 |
| **ORIGINAL PROPERTIES** | | | | | | | | | |
| TENS (MPa) | 14.1 | 13.1 | 13.7 | 13.3 | 14.1 | 13.9 | 12.9 | 15.7 | 14.3 |
| ELONG(%) | 470 | 441 | 349 | 319 | 728 | 700 | 599 | 649 | 616 |
| MOD50 | 1.1 | 1.2 | 1.4 | 1.5 | 0.8 | 0.9 | 1.0 | 1.0 | 1.1 |
| MOD100 | 2.0 | 2.2 | 2.8 | 3.0 | 1.2 | 1.6 | 1.5 | 1.6 | 1.7 |
| MOD200 | 5.2 | 5.6 | 7.2 | 7.7 | 2.2 | 2.5 | 2.9 | 3.2 | 3.3 |
| MOD300 | 8.6 | 9.3 | 11.6 | 12.2 | 3.6 | 4.0 | 4.7 | 5.2 | 5.2 |
| HARDNES S(Sh. A) | 60 | 61 | 63 | 64 | 55 | 57 | 57 | 59 | 58 |
| **DIE C TEAR** | | | | | | | | | |
| TEAR (N/mm) | 39.3 | 39.9 | 38.1 | 37.5 | 36.3 | 38.2 | 36.8 | 38.8 | 36.3 |
| **COMPRESSION SET "B", 70 hrs @ 70°C** | | | | | | | | | |
| % SET | 17 | 16 | 12 | 13 | 20 | 21 | 17 | 19 | 19 |
| **AIR AGEND, 70 HOURS @ 100°C** | | | | | | | | | |
| TENs (MPa) | 12.0 | 13.4 | 12.1 | 12.1 | 12.7 | 13.5 | 13.0 | 14.3 | 10.2 |
| ELONG (%) | 449 | 453 | 339 | 318 | 663 | 651 | 571 | 581 | 462 |
| MOD50 | 1.1 | 1.2 | 1.3 | 1.5 | 0.9 | 1.0 | 1.0 | 1.1 | 1.2 |
| MOD100 | 2.0 | 2.2 | 2.7 | 3.0 | 1.3 | 1.5 | 1.7 | 1.8 | 2.0 |
| MOD200 | 5.0 | 5.6 | 6.9 | 7.5 | 2.7 | 3.0 | 3.5 | 3.8 | 4.1 |
| MOD300 | 8.2 | 9.0 | 10.7 | 11.7 | 4.4 | 4.9 | 5.6 | 6.2 | 6.2 |
| HARDNESS (Sh. A) | 61 | 62 | 64 | 64 | 57 | 58 | 58 | 62 | 63 |
| **RETENTIONS** | | | | | | | | | |
| RET TENS | 85 | 102 | 88 | 91 | 90 | 97 | 101 | 91 | 72 |

Table continued

| | | | | | | | | | |
|---|---|---|---|---|---|---|---|---|---|
| **RETENTIONS** | | | | | | | | | |
| RET ELONG | 96 | 103 | 97 | 100 | 91 | 93 | 95 | 90 | 75 |
| RET MOD50 | 100 | 101 | 97 | 100 | 108 | 108 | 106 | 107 | 111 |
| RET MOD100 | 99 | 102 | 96 | 100 | 114 | 116 | 112 | 113 | 118 |
| RET MOD200 | 97 | 99 | 96 | 98 | 122 | 122 | 118 | 119 | 123 |
| RET MOD300 | 95 | 98 | 93 | 95 | 122 | 122 | 118 | 121 | 120 |
| HARDNESS CHANGE | 1 | 1 | 1 | 0 | 2 | 1 | 1 | 3 | 5 |
| **AIR AGED, 70 HOURS @ 125°C** | | | | | | | | | |
| TENS (MPa) | 8.4 | 9.4 | 10.3 | 9.9 | 7.1 | 7.6 | 7.7 | 8.2 | 5.3 |
| ELONG (%) | 445 | 450 | 326 | 332 | 633 | 629 | 509 | 506 | 215 |
| MOD50 | 1.0 | 1.1 | 1.3 | 1.4 | 0.8 | 0.9 | 1.0 | 1.1 | 1.6 |
| MOD100 | 1.8 | 2.0 | 2.6 | 2.9 | 1.2 | 1.3 | 1.5 | 1.6 | 2.8 |
| MOD200 | 4.1 | 4.6 | 6.4 | 6.8 | 2.1 | 2.4 | 2.9 | 3.1 | 5.0 |
| MOD300 | 6.3 | 7.0 | 9.7 | 9.9 | 3.1 | 3.5 | 4.4 | 4.7 | 0.0 |
| HARDNESS (Sh. A) | 60 | 61 | 62 | 64 | 56 | 57 | 57 | 60 | 63 |
| **RETENTIONS** | | | | | | | | | |
| RET TENS | 60 | 72 | 75 | 74 | 50 | 55 | 60 | 52 | 37 |
| RET ELONG | 95 | 102 | 93 | 104 | 87 | 90 | 85 | 78 | 35 |
| RET MOD50 | 90 | 93 | 96 | 96 | 99 | 101 | 98 | 103 | 144 |
| RET MOD100 | 87 | 91 | 93 | 95 | 101 | 103 | 101 | 103 | 103 |
| RET MOD200 | 78 | 81 | 89 | 87 | 94 | 97 | 98 | 97 | 151 |
| RET MOD300 | 73 | 76 | 83 | 81 | 86 | 88 | 92 | 91 | 0 |
| HARDNESS CHANGE | 0 | 0 | -1 | 0 | 1 | 0 | 0 | 1 | 5 |
| **ADHESION TO RUBBER PLY, RT** | | | | | | | | | |
| AVGLOA D (N/cm) | 112 | 146 | 81 | 83 | 152 | 163 | 122 | 122 | 93 |
| **ADHESION TO RUBBER PLY, 95°C** | | | | | | | | | |
| AAVGLO AD (N/cm | 200 | 190 | 117 | 143 | 199 | 202 | 117 | 108 | 48 |
| **TEXUS FLEX, 50°C, 41% STRAIN** | | | | | | | | | |
| CYCLES | crack propagation, inches | | | | | | | | |
| 100K | 0.10 | 0.11 | 0.14 | 0.12 | 0.10 | 0.11 | 0.10 | 0.11 | 0.10 |
| 250K | 0.15 | 0.20 | 0.26 | 0.20 | 0.12 | 0.16 | 0.14 | 0.16 | 0.12 |
| 500K | 0.20 | 0.27 | 0.37 | 0.28 | 0.15 | 0.20 | 0.17 | 0.21 | 0.13 |
| 1 MM | 0.37 | 0.50 | 0.73 | 0.66 | 0.23 | 0.32 | 0.25 | 0.27 | 0.16 |
| 1.5MM | 0.55 | 0.64 | 0.80 | 0.85 | 0.217 | 0.39 | 0.29 | 0.30 | 0.18 |

Table continued

| TEXUS FLEX, 50°C, 41% STRAIN | | | | | | | | | |
|---|---|---|---|---|---|---|---|---|---|
| CYCLES | crack propagation, inches | | | | | | | | |
| 2MM | 0.73 | 0.82 | 0.86 | 0.95 | 0.33 | 0.53 | 0.37 | 0.34 | 0.19 |
| 2.5MM | 0.80 | 0.91 | 0.87 | 1.00 | 0.37 | 0.59 | 0.43 | 0.36 | 0.19 |
| 3MM | 0.87 | 0.97 | 0.94 | 1.00 | 0.39 | 0.64 | 0.48 | 0.41 | 0.21 |
| 3.5MM | 0.95 | 1.00 | 0.96 | 1.00 | 0.41 | 0.66 | 0.50 | 0.43 | 0.21 |
| 4MM | 1.00 | 1.00 | 0.96 | 1.00 | 0.41 | 0.70 | 0.53 | 0.43 | 0.23 |
| 4.5MM | 1.00 | 1.00 | 0.98 | 1.00 | 0.42 | 0.74 | 0.58 | 0.45 | 0.23 |
| 5MM | 1.00 | 1.00 | 1.00 | 1.00 | 0.43 | 0.76 | 0.61 | 0.46 | 0.24 |
| **TEXUS FLEX, 100°c, 41% strain, samples pre-aged 70 hours @ 100°D** | | | | | | | | | |
| cycles | Crack propagation, inches | | | | | | | | |
| 100K | 0.22 | 0.28 | 0.37 | 0.34 | 0.19 | 0.16 | 0.16 | 0.16 | 0.14 |
| 250K | 0.39 | 0.59 | 0.63 | 0.91 | 0.26 | 0.21 | 0.21 | 0.23 | 0.17 |
| 500K | 0.68 | 0.82 | 0.9 | 1 | 0.28 | 0.27 | 0.32 | 0.33 | 0.22 |
| 1MM | 0.85 | 0.97 | 0.97 | 1 | 0.3 | 0.33 | 0.38 | 0.43 | 0.3 |
| 1.5MM | 0.91 | 1 | 1 | 1 | 0.33 | 0.36 | 0.39 | 0.43 | 0.47 |
| 2MM | 0.92 | 1 | 1 | 1 | 0.33 | 0.38 | 0.43 | 0.45 | 0.5 |
| 2.5MM | 0.96 | 1 | 1 | 1 | 0.33 | 0.38 | 0.44 | 0.45 | 0.5 |
| 3MM | 1 | 1 | 1 | 1 | 0.35 | 0.41 | 0.46 | 0.46 | 0.51 |
| 3.5MM | 1 | 1 | 1 | 1 | 0.38 | 0.42 | 0.48 | 0.47 | 0.53 |
| 4mm | 1 | 1 | 1 | 1 | 0.4 | 0.42 | 0.49 | 0.47 | 0.53 |
| 4.5mm | 1 | 1 | 1 | 1 | 0.41 | 0.44 | 0.51 | 0.47 | 0.54 |
| 5mm | 1 | 1 | 1 | 1 | 0.43 | 0.46 | 0.54 | 0.48 | 0.56 |

As seen in Table 3, samples 5-8 containing silica, peroxide and coagent showed significant improvement in retention of tensile properties upon aging at elevated temperature as compared with samples 1-4. Samples 5-8 also showed significantly better resistance to flex cracking (Texus flex).

## Claims

**1.** An airspring having an airsleeve comprising an elastomeric liner; a reinforcing layer overlaying the liner; and a colorable elastomeric cover overlaying the reinforcing layer; the cover made from a vulcanizable elastomeric composition comprising:

100 parts by weight of elastomer comprising from 30 to 50 parts by weight of natural rubber, from 10 to 30 parts by weight of polybutadiene, and from 30 to 50 parts by weight of ethylene propylene diene terpolymer (EPDM);
from 20 to 60 parts by weight, per 100 parts by weight of elastomer, of silica;
from 1 to 10 parts by weight, per 100 parts by weight of elastomer, of an organosilane polysulfide;
from 1 to 10 parts by weight, per 100 parts by weight of elastomer, of an organic peroxide; and
from 0.1 to 40 parts by weight, per 100 parts by weight of elastomer, of a crosslinking coagent.

**2.** The airspring of claim 1, wherein the vulcanizable elastomeric composition further comprises from 1 to 5 parts by weight, per 100 parts by weight of elastomer, of triethanolamine.

**3.** The airspring of claim 1 or 2, wherein the vulcanizable elastomeric composition further comprises from 0.1 to 8 parts

by weight, per 100 parts by weight of elastomer, of a sulfur vulcanizing agent.

4. The airspring of at least one of the previous claims, wherein the vulcanizable elastomeric composition further comprises at least one colorant.

5. The airsleeve of at least one of the previous claims, wherein the vulcanizable elastomeric composition further comprises at least one colorant selected from organic dyes, inorganic dyes, organic pigments, and inorganic pigments, and carbon black.

6. The airspring of at least one of the previous claims, the reinforcing layer comprising: textile fibers having distributed over surface portions thereof an RFL adhesive; and a vulcanizable plycoat rubber composition.

7. The airspring of claim 6, wherein textile fibers comprises nylon.

8. The airspring of at least one of the previous claims, wherein said airspring is selected from shock absorbers, struts, truck cab suspension springs, truck driver seat springs, automobile airsprings, and industrial airsprings.

9. The airspring of at least one of the previous claims, wherein the coagent is zinc diacrylate or zinc dimethacrylate.

10. The airspring of at least one of the previous claims, wherein the coagent is present in an amount ranging from 1 to 10 parts by weight per 100 parts by weight of elastomer.

European Patent Office

# EUROPEAN SEARCH REPORT

Application Number
EP 05 11 2351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 786 476 B1 (KERSTETTER, III RANDAL HOWARD ET AL) 7 September 2004 (2004-09-07) * the whole document * ----- | 1-10 | INV. F16F9/04 B29D22/00 |
| A | EP 0 506 465 A (JAPAN SYNTHETIC RUBBER CO., LTD; NTN CORPORATION) 30 September 1992 (1992-09-30) * page 5, line 40 - page 5, line 56 * ----- | 1-10 | |
| A | EP 1 484 525 A (THE GOODYEAR TIRE & RUBBER COMPANY) 8 December 2004 (2004-12-08) * the whole document * ----- | 1-10 | |
| | | | TECHNICAL FIELDS SEARCHED (IPC) |
| | | | F16F |

The present search report has been drawn up for all claims

1

| Place of search | Date of completion of the search | Examiner |
|---|---|---|
| Munich | 21 March 2006 | Prussen, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 11 2351

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2006

| Patent document cited in search report | Publication date | Patent family member(s) | Publication date |
|---|---|---|---|
| US 6786476 B1 | 07-09-2004 | BR 0402745 A | 31-05-2005 |
| | | EP 1500844 A1 | 26-01-2005 |
| EP 0506465 A | 30-09-1992 | AU 647597 B2 | 24-03-1994 |
| | | AU 1308492 A | 01-10-1992 |
| | | DE 69227140 D1 | 05-11-1998 |
| | | DE 69227140 T2 | 08-04-1999 |
| | | KR 137753 B1 | 01-05-1998 |
| | | US 5550190 A | 27-08-1996 |
| EP 1484525 A | 08-12-2004 | BR 0401873 A | 04-01-2005 |
| | | JP 2004360894 A | 24-12-2004 |
| | | US 2004248485 A1 | 09-12-2004 |

EPO FORM P0459

For more details about this annex : see Official Journal of the European Patent Office, No. 12/82